# EUROPÄISCHE PATENTSCHRIFT

(11) **EP 0 819 600 B1**
(45) Veröffentlichungstag und Bekanntmachung des Hinweises auf die Patenterteilung: **15.01.2003**
(21) Anmeldenummer: 97109626.8
(22) Anmeldetag: 13.06.1997
(51) Int. Cl.: B64C 5/10

(54) **Schwenkleitwerk für ein Flugzeug**
Printing stabilising vanes for aircraft
Ailes stabilisatrices pivotantes pour avion

(30) Priorität: 18.07.1996 DE 19628920; 13.11.1996 DE 19646794
(43) Veröffentlichungstag der Anmeldung: 21.01.1998
(73) Patentinhaber: Airbus Deutschland GmbH, 21129 Hamburg (DE)
(72) Erfinder: Van der Velden, Alexander, Dr.-Ing., 28203 Bremen (DE)
(74) Vertreter: Hansmann, Dierk, Dipl.-Ing.

(56) Entgegenhaltungen:
- US-A- 3 218 005
- US-A- 3 971 535

## Beschreibung

Die Erfindung bezieht sich auf ein Schwenkleitwerk für ein Flugzeug gemäss dem Oberbegriff des Anspruchs 1. Solch ein Leitwerk ist aus der US-A-3 971 535 bekannt. Schwenkleitwerke werden vorwiegend in Form von Entenflügeln verwendet, um die Steuerbarkeit von Flugzeugen, insbesondere mit Deltaflügeln zu erhöhen. Bei Überschallflugzeugen muß der Entenflügel über einen großen Geschwindigkeitsbereich eine hinreichende Wirkung zeigen, weshalb man bestrebt ist, diesen mit einer variablen Geometrie auszubilden. Eine derartige Lösung ist durch das Flugzeug Tupolev Tu-144 bekannt geworden. Hierbei besteht der Entenflügel aus zwei Hälften, die jeweils um eine innerhalb des Rumpfes angeordnete vertikale Achse zwischen einer voll ausgeschwenkten und einer eingeschwenkten Position bewegbar ausgebildet sind. Diese Lösung bringt zwar gegenüber einem starren Entenflügel erhebliche aerodynamische Vorteile, was jedoch mit einem beachtlichen Gewichtsnachteil erkauft wird. So müssen die betreffenden Schwenklager sehr große Biegemomente aufnehmen, was zu einer deutlichen Zunahme des Baugewichts führt.

Demgemäß liegt der Erfindung die Aufgabe zugrunde, ein gattungsgemäßes Schwenkleitwerk derart auszubilden, daß sich eine deutliche Vereinfachung des mechanischen Aufwandes und des Baugewichtes ergibt.

Diese Aufgabe wird bei einem gattungsgemäßen Schwenkleitwerk durch die kennzeichnenden Merkmale des Patentanspruchs 1 gelöst.

Dabei ist insbesondere von Vorteil, daß die angestrebten aerodynamischen Vorteile mit relativ geringem mechanischem Aufwand erreicht werden. Außerdem ist von Vorteil, daß das Schwenkleitwerk für Bewegungen des Flugzeuges am Boden im Flughafenbereich eingeschwenkt werden kann, so daß Kollisionen mit flughafenseitigen Boarding-Einrichtungen leichter vermieden werden.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: ein Flugzeug mit einem Schwenkleitwerk in voll ausgefahrener Position,
- Fig. 2: das Flugzeug nach Fig.1 mit halb ausgefahrenem Schwenkleitwerk,
- Fig. 3: das Flugzeug nach Fig.2 mit voll eingefahrenem Schwenkleitwerk und
- Fig. 4: schematisch eine Seitenansicht des Flugzeuges nach Fig.1.

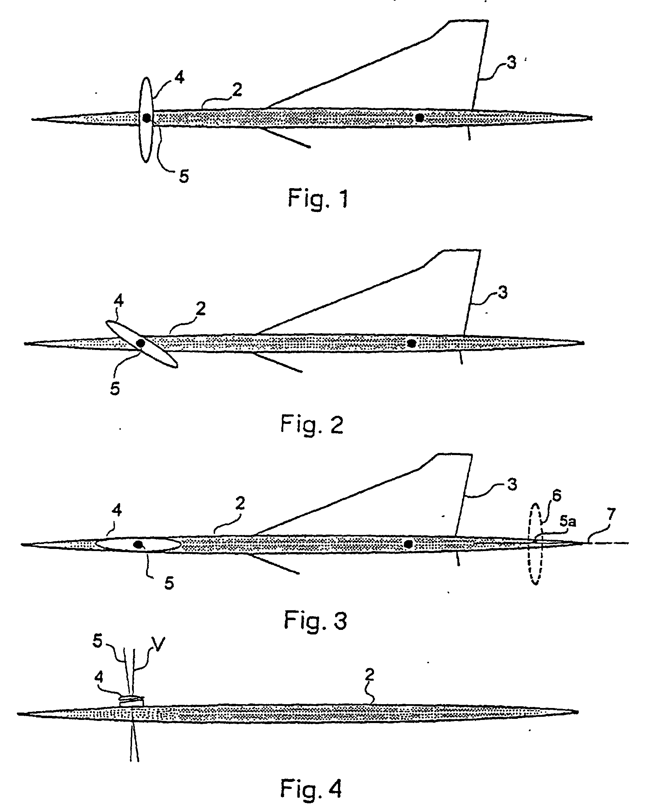

Figur 1 zeigt ein Flugzeug 1 mit einem Rumpf 2, einem Deltaflügel 3 und einem erfindungsgemäßen Schwenkleitwerk 4. Hierbei besteht die Erfindung darin, daß das Schwenkleitwerk 4 als sogenannter Schrägflügel ausgebildet ist. Dieser Flügel ist einteilig ausgebildet und weist annähernd in seiner Mitte einen Drehpunkt auf, in dem er um eine annähernd vertikale Achse 5 schwenkbar ist. Das Bild zeigt das Schwenkleitwerk 4 in voll ausgefahrener Position, in der er bei niedrigen Geschwindigkeiten maximale Wirkung zeigt. Diese Konfiguration ist vorteilhaft bei Start und Landung.

Figur 2 zeigt das Flugzeug 1 mit schräg gestelltem Schwenkleitwerk 4. In dieser Position ist die wirksame Spannweite des Schwenkleitwerks reduziert. Außerdem weist das Leitwerk jetzt eine Pfeilung auf. Diese Konfiguration ist vorteilhaft im Reiseflug bei transsonischen Geschwindigkeiten.

Figur 3 zeigt das Flugzeug 1 mit voll eingezogenem Schwenkleitwerk 4. In diese Position wird das Schwenkleitwerk beim Übergang in den Überschallbereich gebracht, da in diesem Geschwindigkeitsbereich die Wirkung des Schwenkleitwerks 4 nicht benötigt wird. Bei Bewegungen des Flugzeuges am Boden reduziert das eingeschwenkte Leitwerk die Gefahr von Kollisionen mit flughafenseitigen Boarding-Einrichtungen.

Die Verwendung des erfindungsgemäßen Schwenkleitwerks ist nicht auf die Anwendung als Entenflügel beschränkt. Es sind auch Flugzeug-Konfigurationen denkbar, wobei das Schwenkleitwerk als Heckleitwerk angewendet wird. In Fig.3 ist ein derartiges Heckleitwerk 6 schematisch angedeutet.

Figur 4 zeigt das obige Flugzeug mit dem Rumpf 2 und dem Schwenkleitwerk 4 schematisch in einer Seitenansicht. Hier erscheint die Schwenkachse 5 in der Bildebene. Man erkennt, daß die Schwenkachse 5 gegenüber der Vertikalen V nach vorn geneigt ist. Durch diese Maßnahme können aerodynamische Unsymmetrien, die durch die Schwenkbewegung entstehen, ausgeglichen werden. Die Vertikale V steht im Horizontalflug senkrecht auf der Flugachse.

Eine weitere Maßnahme, um aerodynamische Unsymmetrien, die durch die Schwenkbewegung entstehen, auszugleichen besteht darin, daß die Schwenkachse außerhalb der vertikalen Symmetrieebene des Flugzeuges liegt. Siehe hierzu Schwenkachse 5a und Symmetrieebene 7 in Fig.3.

Die statischen Vorteile eines einteiligen Schrägflügels ergeben sich dadurch, daß dieser in statischer Hinsicht wie ein durchgehender Biegebalken wirkt. Hierdurch wird das Schwenklager nicht durch Kräfte belastet, die sich aus Biegemomenten ergeben. Weitere Vorteile, insbesondere im Hinblick auf die Kinematik, werden dadurch erreicht, daß der Schwenkmechanismus nur ein Schwenklager aufweist. Dies führt zu einer einfachen Konstruktion von geringem Gewicht. Außerdem sind zur Betätigung des erfindungsgemäßen Schwenkleitwerks nur noch geringe Antriebskräfte erforderlich.

Eine Ausgestaltung der Erfindung besteht darin, daß das Schwenkleitwerk Steuerflächen in Form üblicher Steuerklappen aufweist.

Eine weitere Ausgestaltung der Erfindung besteht darin, daß das Schwenkleitwerk zu Steuerzwecken um seine Längsachse schwenkbar ausgebildet ist. Hiermit kann der Einstellwinkel des Schwenkleitwerks verändert werden.

Die Erfindung mit einem ungepfeilten Schwenkleitwerk eröffnet die Möglichkeit, Schwenkleitwerke zu realisieren, die in ihrer voll ausgefahrenen Position gegenüber bisherigen Lösungen größere Spannweiten und Streckungen aufweisen. Damit können größere Leitwerkskräfte erzeugt werden als mit den bisherigen Entenflügeln, die infolge ihrer Deltaform nur eine geringe Streckung aufweisen. Berücksichtigt man die wachsende Bedeutung der Startleistung, insbesondere im Hinblick auf die Geräuschentwicklung, wird eine zweite Generation von Überschallverkehrsflugzeugen im Gegensatz zur Concorde nicht ohne die Hilfe von Auftriebsklappen am Flügel für Start und Landung auskommen. Da diese Klappen bei einem Deltaflügel in einem großen Abstand zum Schwerpunkt des Flugzeuges angeordnet sind, werden große Leitwerksmomente benötigt, um die von diesen Klappen erzeugten Momente auszugleichen. Das erfindungsgemäße Leitwerk ermöglicht die Erzeugung derart großer Leitwerksmomente auf eine äußerst kosteneffektive Weise.

## Patentansprüche

1. Schwenkhöhenleitwerk für ein Flugzeug, das einteilig ausgebildet ist und annähernd in seiner Mitte einen Drehpunkt aufweist, in dem es um eine annähernd vertikale Achse schwenkbar gelagert ist, **dadurch gekennzeichnet, daß** die Achse (5) weit vor dem Schwerpunkt des Flugzeuges nahe dem Rumpfbug angeordnet ist.

2. Schwenkhöhenleitwerk nach Anspruch 1, **dadurch gekennzeichnet, daß** die Achse (5) gegenüber einer Vertikalen (V) nach vom geneigt ist.

3. Schwenkhöhenleitwerk nach Anspruch 1, **dadurch gekennzeichnet, daß** das Schwenkhöhenleitwerk (4) Steuerflächen in Form üblicher Steuerklappen aufweist.

4. Schwenkhöhenleitwerk nach einem der Ansprüche 1 bis 3, **dadurch gekennzeichnet, daß** das Schwenkhöhenleitwerk (4) zu Steuerzwecken um seine Längsachse schwenkbar ausgebildet ist.

## Claims

1. Pivoting altitude stabiliser for an aircraft, which stabiliser is of one-piece construction and has, approximately in its centre, a point of rotation at which it is mounted so as to be pivotable about an approximately vertical axis, **characterised in that** the axis (5) is disposed a long way in front of the centre of gravity of the aircraft, close to the nose of the fuselage.

2. Pivoting altitude stabiliser according to claim 1, **characterised in that** the axis (5) is inclined forwards in relation to a vertical (V).

3. Pivoting altitude stabiliser according to claim 1, **characterised in that** the said pivoting altitude stabiliser (4) has control faces in the form of ordinary control flaps.

4. Pivoting altitude stabiliser according to one of claims 1 to 3, **characterised in that** the said pivoting altitude stabiliser (4) is constructed, for control purposes, so as to be pivotable about its longitudinal axis.

## Revendications

1. Ailes stabilisatrices pivotantes pour avion conçues d'un seul tenant et présentant à peu près en leur centre un point de rotation autour duquel les ailes stabilisatrices sont disposées de manière à pouvoir pivoter autour d'un axe presque vertical, **caractérisées en ce que** l'axe (5) est situé près de la proue de fuselage loin devant le centre de gravité de l'avion.

2. Ailes stabilisatrices selon la revendication 1, **caractérisées en ce que** l'axe (5) est incliné vers l'avant par rapport à une verticale (V).

3. Ailes stabilisatrices pivotantes selon la revendication 1, **caractérisées en ce que** lesdites ailes (4) présentent des surfaces de commande en forme de clapets pilotes traditionnels.

4. Ailes stabilisatrices pivotantes selon une des revendications 1 à 3, **caractérisées en ce que** lesdites ailes (4) peuvent pivoter autour de leur axe longitudinal à des fins de commande.
